# EUROPÄISCHE PATENTSCHRIFT

(11) **EP 4 051 956 B1**
(45) Veröffentlichungstag und Bekanntmachung des Hinweises auf die Patenterteilung: **09.07.2025**
(21) Anmeldenummer: 20793687.3
(22) Anmeldetag: 21.10.2020
(51) Int. Cl.: F21S 43/237, F21S 43/239, F21S 43/243, F21V 8/00

(54) **BELEUCHTUNGSVORRICHTUNG FÜR FAHRZEUGE**
LIGHTING APPARATUS FOR VEHICLES
APPAREIL D'ÉCLAIRAGE POUR VÉHICULES

(30) Priorität: 30.10.2019 DE 102019129339
(43) Veröffentlichungstag der Anmeldung: 07.09.2022
(73) Patentinhaber: HELLA GMBH & CO. KGAA, 59552 Lippstadt (DE)
(72) Erfinder: LEIER, Yves Alexander, 59557 Lippstadt (DE); THOMANEK, Niko, 59494 Soest (DE)
(86) Internationale Anmeldenummer: PCT/EP2020/079542
(87) Internationale Veröffentlichungsnummer: WO 2021/083749

(56) Entgegenhaltungen:
- JP-A- 2014 235 819
- US-A1- 2014 247 615
- US-A1- 2017 219 178

## Beschreibung

Die Erfindung betrifft eine Beleuchtungsvorrichtung für Fahrzeuge.

Aus der DE 10 2015 107 067 A1 ist eine Beleuchtungsvorrichtung für Fahrzeuge bekannt, die ein flächiges Lichtleitelement aufweist. Das flächige Lichtleitelement ermöglicht eine schmale bzw. langgestreckte Lichtsignatur, wobei Licht an einer ersten Schmalseite des flächigen Lichtleitelementes eingekoppelt und an einer weiteren zweiten Schmalseite ausgekoppelt wird. Zwischen der ersten und zweiten Schmalseite erstrecken sich gegenüberliegende Flachseiten, an der das eingekoppelte Licht totalreflektiert wird. Die erste Schmalseite und die zweite Schmalseite sind über eine Verbindungsseite miteinander verbunden, die die gleiche Breite aufweist wie die erste und zweite Schmalseite. An der Verbindungsseite wird weder Licht eingekoppelt noch ausgekoppelt. Der ersten Schmalseite ist eine Mehrzahl von Lichtleitern zugeordnet, die jeweils fingerartig an der ersten Schmalseite anliegen. Die Lichtleiter weisen jeweils eine erste Stirnseite auf, an der eine Lichtquelle angeordnet ist, und eine zweite Stirnseite, die unmittelbar an der ersten Schmalseite des flächigen Lichtleitelementes anliegt. Vorteilhaft können hierdurch die Lichtquellen auf einer gemeinsamen Trägerplatte angeordnet sein, die parallel zu den Flachseiten verläuft.

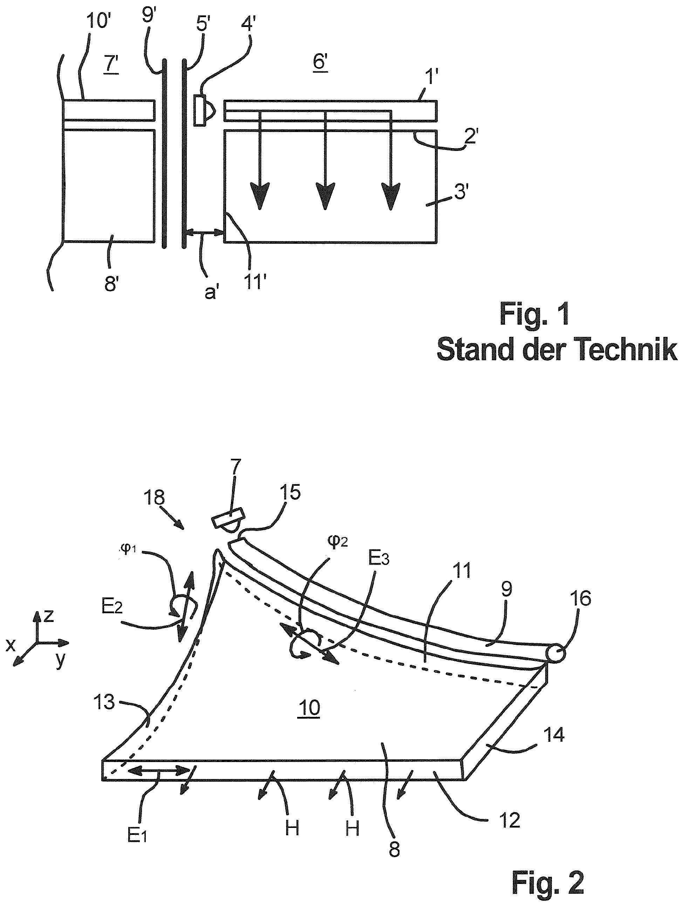

Wenn eine Signallichtfunktion erzeugt wird, ist es wünschenswert, den Kostenaufwand so weit wie möglich zu reduzieren. Wie aus Figur 1 zu ersehen ist, ist es bei der Heckbeleuchtung eines Fahrzeugs bekannt, einen Lichtleiter 1' entlang einer ersten Schmalseite 2' eines flächigen Lichtleitelementes 3' anzuordnen. Vorteilhaft wird dann nur eine einzige Lichtquelle 4' benötigt. Diese Lichtquelle 4' ist in einem zu einer Gehäuseabschlusskante 5' nahen Bereich eines beweglichen Karosseriebauteils 6', beispielsweise Heckklappe, angeordnet. An einem feststehenden Karosseriebauteil 7' schließt sich eine weitere Beleuchtungsvorrichtung mit einem flächigen Lichtleitelement 8' an, wobei dieses relativ nah an einer Gehäuseabschlusskante 9' des Karosseriebauteils 7' angeordnet sein kann, weil ein einkoppelnder Lichtleiter 10' von einer der Gehäusekarosseriekante 9' abgewandten Seite her mit Licht versorgt wird. Die in der Heckklappe 6' verbaute Lichtquelle 4' muss auf der der Gehäusekante 5' zugewandten Seite des Lichtleiters 1' angeordnet sein, da der Lichtleiter 1' in einem Winkel zu einer Fahrzeuglängsachse verläuft und somit der Umlenkungswinkelbereich für eine Lichteinkopplung von der Gehäusekante 5' her wesentlich kleiner ist als wenn das Licht von der der Gehäusekante 5' abgewandten Seite des Lichtleiters 1 eingekoppelt würde. Bei einer 45°-Verkippung des Lichtleiters 1' zu der Fahrzeuglängsachse braucht das von der Gehäusekante 5' her in dem Lichtleiter eingekoppelte Licht nur um ca. 225° umgelenkt werden, während es von der gegenüberliegenden Seite her um 315° umgelenkt werden müsste. Der Nachteil bei der Anordnung der Lichtquelle 4' auf der dem Gehäuseabschlusskante 5' zugewandten Seite des Lichtleiters 1' besteht darin, dass ein relativ großer Abstand a' zwischen der Gehäuseabschlusskante 5' und einer Verbindungslinie 11' des flächigen Lichtleiters 3' 3 entsteht. Wünschenswert ist, diesen Abstand a' möglichst klein zu halten, damit eine möglichst unterbrechungsfreie Abstrahlung der Signallichtfunktion von der in der Heckklappe 6' verbauten Beleuchtungseinrichtung und der in dem benachbarten Karosseriebauteil verbauten Beleuchtungsvorrichtung 8' erfolgen kann.

Aus der JP 2014 235819 A ist eine Beleuchtungsvorrichtung für Fahrzeuge mit einem flächigen Lichtleitelement bekannt. Das flächige Lichtleitelement weist gegenüberliegende Flachseiten sowie eine zur Lichteinkopplung vorgesehene erste Schmalseite und eine zur Lichtauskopplung vorgesehene zweite Schmalseite auf. Der ersten Schmalseite des flächigen Lichtleitelements ist ein konturfolgender langgestreckter Lichtleiter zugeordnet, an dessen Stirnseite Licht von einer Lichtquelle eingekoppelt wird. Das flächige Lichtleitelement ist quer zur Hauptabstrahlung der Beleuchtungsvorrichtung gleichmäßig bogenförmig ausgebildet.

Auch die US2014/247615 A1 und die US 2017/219178 A1 offenbaren gleichmäßig bogenförmig ausgebildete erste Schmalseiten und zweite Schmalseiten eines flächigen Lichtleitelements.

Aufgabe der vorliegenden Erfindung ist es daher, eine Beleuchtungsvorrichtung für Fahrzeuge derart weiterzubilden, dass kostengünstig eine zu einer Gehäuseabschlusskante nahe Lichtausleuchtfläche gewährleistet ist, damit insbesondere der Abstand zu einer weiteren Beleuchtungsvorrichtung, die in einem benachbarten Karosseriebauteil verbaut ist, möglichst klein ist.

Zur Lösung dieser Aufgabe weist die Erfindung Die Merkmale des Patentanspruchs 1 auf.

Der besondere Vorteil der Erfindung besteht darin, dass der Abstand einer Ausleuchtfläche des flächigen Lichtleitelementes zu einer Gehäuseabschlusskante eines Karosseriebauteils klein sein kann. Eine Verbindungsseite, die eine lichteinkoppelnde erste Schmalseite und eine lichtauskoppelnde zweite Schmalseite des flächigen Lichtleitelementes verbindet, verläuft in Richtung eines Eckbereiches des flächigen Lichtleitelementes, in dem sie mit der ersten Schmalseite zusammenläuft, im Wesentlichen bogenförmig. Auf diese Weise ist der Eckbereich bezüglich einer aus der zweiten Schmalseite und der Lichtabstrahlrichtung des flächigen Lichtleitelementes gebildeten Ebene erhaben angeordnet. Durch die erhabene Anordnung des Eckbereiches und der ersten Stirnfläche des Lichtleiters muss eine Hauptachse der Lichtquelle nicht senkrecht zu der Gehäuseabschlusskante verlaufen, sondern in einem relativ steilen Winkel hierzu. Vorteilhaft kann somit zu einer Gehäuseabschlusskante eine relativ nahe Ausleuchtung erfolgen. Da der Eckbereich erhaben gegenüber dem weiteren Teil des flächigen Lichtleiterelementes ausgebildet ist, kann die erforderliche Bauraumtiefe verringert werden.

Nach der Erfindung ist die Verbindungsseite bezüglich einer Erstreckungslinie der Verbindungsseite verdreht angeordnet. Die Verdrehung der Verbindungsseite um die eigene Erstreckungsachse entsprechend einer Torsion bewirkt, dass der Abstand der Verbindungsseite zu der Gehäuseabschlusskante unabhängig von der Anordnung der Lichtquelle relativ nah erfolgen kann.

Nach einer Weiterbildung der Erfindung ist die erste Schmalseite des flächigen Lichtleitelementes in Richtung des Eckbereiches bogenförmig und um eine Erstreckungslinie derselben um einen Verdrehwinkel verdreht ausgebildet, so dass das Licht relativ steil und unter einem großen Winkel bezüglich der durch die Erstreckung der zweiten Schmalseite und der Hauptabstrahlrichtung aufgespannten Ebene angeordnet ist. Die Lichtquelle kann somit bei Projektion auf die durch die zweite Schmalseite und der Hauptabstrahlrichtung gebildete Ebene zumindest teilweise im Wesentlichen auf dem flächigen Lichtleitelement angeordnet sein. Durch das Verdrillen der Verbindungsseite und vorzugsweise der ersten Schmalseite des flächigen Lichtleitelementes in Richtung des Eckbereiches kann das durch die erste Schmalseite eingekoppelte Licht im Wesentlichen im Eckbereich parallel zu der Verbindungsseite an der ersten Schmalseite eingekoppelt und entlang der Verbindungsseite weitergeführt werden. Die Lichtverluste sind somit relativ gering.

Nach einer Weiterbildung der Erfindung liegt der Verdrehwinkel der Verbindungsseite und/oder der ersten Schmalseite in einem Bereich zwischen 70° und 90°. Vorteilhaft kann hierdurch das Licht in der gewünschten Weise im Eckbereich des flächigen Lichtleitelementes eingekoppelt und weitergeführt werden.

Nach einer Weiterbildung der Erfindung ist eine Hauptachse der Lichtquelle in einer Senkrechten oder in einem kleinen Winkel zu der Senkrechten angeordnet, wobei die Senkrechte senkrecht zu einer Basisebene des flächigen Lichtleitelementes verläuft. Vorteilhaft kann hierdurch die Lichtquelle im Wesentlichen senkrecht zu einer Ebene ausgerichtet sein, die durch eine Hauptabstrahlrichtung und einer Erstreckungsrichtung der zweiten Schmalseite des flächigen Lichtleitelementes aufgespannt ist. Die Lichtquelle vergrößert somit nicht den erforderlichen Abstand der Verbindungsseite des flächigen Lichtleitelementes zu der Gehäuseabschlusskante.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine Draufsicht auf eine herkömmliche Beleuchtungsvorrichtung mit einem ebenen flächigen Lichtleitelement,
- Fig. 2: eine perspektivische Darstellung einer erfindungsgemäßen Beleuchtungsvorrichtung,
- Fig. 3: eine Draufsicht auf die Beleuchtungsvorrichtung und einer benachbarten in einem anderen Karosseriebauteil verbauten weiteren Beleuchtungsvorrichtung und
- Fig. 4: eine Vorderansicht der in Figur 3 dargestellten Beleuchtungsvorrichtungen.

Eine erfindungsgemäße Beleuchtungsvorrichtung 1 ist in einem ersten Karosseriebauteil 2 verbaut angeordnet. Das erste Karosseriebauteil 2 kann beispielsweise eine Heckklappe eines Fahrzeugs sein. Eine weitere Beleuchtungsvorrichtung 3 ist in einem zu dem ersten Karosseriebauteil 2 benachbarten zweiten Karosseriebauteil 4 verbaut angeordnet, das im vorliegenden Ausführungsbeispiel ortsfest ist. Die beiden Beleuchtungsvorrichtungen 1, 3 dienen zur Erzeugung der gleichen Signallichtfunktion, beispielsweise einer Schlusslichtfunktion.

Aufgrund des Aufbaus der Karosserie ergibt sich ein Spalt zwischen einer Karosserieabschlusskante 5 des ersten Karosseriebauteils 2 und einer Karosserieabschlusskante 6 des zweiten Karosseriebauteils 4. Zur Bereitstellung einer einheitlichen Leuchtfläche ist es wünschenswert, dass die Beleuchtungsvorrichtungen 1, 3 möglichst nah zu den jeweiligen Karosserieabschlusskanten 5 bzw. 6 verlaufen. Aufgrund der erfindungsgemäßen Beleuchtungsvorrichtung 1 ist ein Abstand a der Beleuchtungsvorrichtung 1 zu der Karosserieabschlusskante 5 relativ klein, obwohl eine Lichtquelle 5 in der Nähe der Karosserieabschlusskante 5 angeordnet ist. Alternativ kann die Erfindung auch für Beleuchtungsvorrichtungen eingesetzt werden, bei denen mindestens zwei unterschiedliche Beleuchtungsvorrichtungen durch mindestens ein Gehäuseteil oder Blende voneinander getrennt angeordnet sind. Die Erfindung ermöglicht eine durch ein trennendes Teil bewirkte beabstandete Anordnung von mindestens zwei Beleuchtungsvorrichtungen mit einem geringen Abstand zueinander.

Die Beleuchtungsvorrichtung 1 besteht im Wesentlichen aus einem flächigen Lichtleitelement 8 sowie einem langgestreckten Lichtleiter 9, mittels dessen das von der Lichtquelle 7 abgestrahlte Licht dem flächigen Lichtleitelement 8 zugeführt wird.

Das flächige Lichtleitelement 8 weist gegenüberliegende vorzugsweise parallel zueinander verlaufende Flachseiten 10 auf, an denen eingekoppeltes Licht totalreflektiert wird. In einem Lichteinkoppelbereich des flächigen Lichtleitelementes 8 weist dasselbe eine erste Schmalseite 11 zur Einkopplung des Lichtes auf. In einem Lichtauskoppelbereich weist das flächige Lichtleitelement 8 eine zweite Schmalseite 12 auf zur Auskopplung des Lichtes in Hauptabstrahlrichtung H der Beleuchtungsvorrichtung 1. Die erste Schmalseite 11 und die zweite Schmalseite 12 sind über eine Verbindungsseite 13 miteinander verbunden, wobei die Verbindungsseite 13 im Wesentlichen in dem konstanten Abstand a zu der Karosserieabschlusskante 5 des ersten Karosseriebauteils 2 verläuft. Eine weitere Verbindungsseite 14 ist auf einer der Karosserieabschlusskante 5 abgewandten Seite des flächigen Lichtleitelementes 8 angeordnet.

Der Lichtleiter 9 ist der ersten Schmalseite 11 des flächigen Lichtleitelementes 8 zugeordnet und weist eine erste Stirnseite 15 sowie eine zweite Stirnseite 16 auf, die mittels einer Mantelfläche 17 miteinander verbunden sind. Die Mantelfläche 17 kann beispielsweise im Querschnitt kreisförmig ausgebildet sein, so dass der langgestreckte Lichtleiter 9 zylinderförmig verläuft. An der Mantelfläche 17 und/oder innerhalb des Lichtleiters 9 sind nicht dargestellte Auskoppelelemente vorgesehen zur Umlenkung des in den langgestreckten Lichtleiter 9 eingekoppelten Lichtes, so dass das Licht entlang eines der ersten Schmalseite 11 des flächigen Lichtleitelementes 8 zugeordneten Längsabschnitts der Mantelfläche 17 aus dem Lichtleiter 9 austritt. Der ersten Stirnseite 15 des Lichtleiters 9 ist die Lichtquelle 7 zugeordnet.

Das flächige Lichtleitelement 8 ist nicht eben ausgebildet. Das flächige Lichtleitelement 8 erhebt sich aus einer durch eine Erstreckungslinie E₁ der zweiten Schmalseite 12 und der Hauptabstrahlrichtung H aufgespannten Ebene in Richtung eines hinteren Eckbereichs 18 des Lichtleitelementes 8, wobei der Eckbereich 18 auf einer der Karosserieabschlusskante 5 zugewandten Seite angeordnet ist. Die zweite Schmalseite 12 des flächigen Lichtleitelementes 8 erstreckt sich im vorliegenden Ausführungsbeispiel geradlinig, so dass die Erstreckungslinie E₁ ebenfalls geradlinig ausgebildet ist. Eine Basisebene B des flächigen Lichtleitelementes 8 erstreckt somit in einer x-y-Ebene. Die x-Richtung entspricht der Hauptabstrahlrichtung H. Die zweite Schmalseite 12 des flächigen Lichtleitelementes 8 befindet sich auf einer Vorderseite der Beleuchtungsvorrichtung 1.

Sowohl die Verbindungsseite 13 als auch die erste Schmalseite 11 des flächigen Lichtleitelementes 8 verlaufen in Richtung des Eckbereiches 18 bogenförmig aus der Basisebene B heraus, so dass die Lichtquelle 7 unter Orientierung einer Hauptachse A derselben senkrecht zur Basisebene B bzw. in einem Winkelbereich von 75° bis 105° orientiert angeordnet ist. Die Hauptachse A der Lichtquelle 7 verläuft somit in einer Senkrechten oder in einem kleinen Winkelbereich von + 15° zu der Senkrechten, wobei die Senkrechte senkrecht zu der Basisebene B verläuft.

Es versteht sich, dass der Lichtleiter 9 konturfolgend zu der ersten Schmalseite 11 des flächigen Lichtleitelementes 8 angeordnet ist und die erste Stirnseite 15 im Wesentlichen senkrecht zu der Hauptachse A der Lichtquelle 7 angeordnet ist. Die Hauptachse A stimmt mit der Hauptabstrahlrichtung der Lichtquelle 7 überein, die vorzugsweise als LED-Lichtquelle ausgebildet ist. Durch die im Wesentlichen senkrecht zur Basisebene B ausgerichtete Lichtquelle 7 ist dieselbe - nicht wie beim Stand der Technik - bei Projektion auf die Basisebene B neben dem flächigen Lichtleitelement 8 angeordnet, sondern schneidet dasselbe bzw. ist im Wesentlichen innerhalb des flächigen Lichtleitelementes 8 angeordnet. Ein Abstand a zwischen der Beleuchtungsvorrichtung 1 und der Karosserieabschlusskante 5 kann somit relativ klein gewählt werden. Beim gemeinsamen Betrieb der Beleuchtungsvorrichtung 1 und der weiteren Beleuchtungsvorrichtung 3 ergibt sich eine fast unterbrechungsfreie homogene Ausleuchtfläche, die durch die zweite Schmalseite 12 der Beleuchtungsvorrichtung 1 und eine Schmalfläche 19 der weiteren Beleuchtungsvorrichtung 3 gebildet ist.

Die Verbindungsseite 13 oder die erste Schmalseite 11 ist bezüglich einer Erstreckungslinie E₂ bzw. E₃ derselben um einen Verdrehwinkel φ ₁ bzw. φ ₂ verdreht verlaufend in Richtung des Eckbereichs 18 ausgebildet. Wie aus Figur 2 ersichtlich ist, ist die Vebindungsseite 13 in Richtung des Eckbereichs 18 um die Erstreckungslinie E₂ rechtsherum um den Verdrehwinkel φ ₁ verdreht. Die erste Schmalseite 11 ist in Richtung des Eckbereichs 18 um die Erstreckungslinie E₃ linksherum um den Verdrehwinkel φ ₂ verdreht. Der Verdrehwinkel φ ₁ bzw. φ ₂ kann im Bereich zwischen 70° und 90° liegen. Vorteilhaft kann die Lichtausbeute verbessert werden, ohne dass seitlich, also an der Verbindungsseite 13 Licht aus dem flächigen Lichtleitelement 8 austreten kann.

Die erste Schmalseite 11 und die Verbindungsseite 13 verlaufen kontinuierlich bogenförmig in Richtung des Eckbereichs 18. Die Erstreckungslinien E₂, E₃ sind ebenfalls bogenförmig ausgebildet.

Der bogenförmige Verlauf der ersten Schmalseite 11 verläuft in einem dreidimensionalen Raum. Es wird eine erste Bogenformkomponente gebildet, die in der y-z-Ebene verläuft, also in einer Querebene zu der Hauptabstrahlrichtung H. Eine weitere Bogenformkomponente verläuft in der x-y-Richtung, also in der Basisebene B. Bei horizontaler Anordnung der Basisebene B verläuft die erste Schmalseite 11 somit in Richtung des Eckbereichs 18 nach oben und nach hinten bogenförmig.

Die Verbindungsseite 13 verläuft ausschließlich in der x-z-Ebene bogenförmig, also in einer zu der Basisebene B senkrechten Ebene, die parallel zur Hauptabstrahlrichtung H verläuft.

Vorzugsweise verläuft die Verbindungsseite 13 konturfolgend zur Karosserieabschlusskante 5 des ersten Karosseriebauteils 2. Gegebenenfalls kann sie auch bogenförmig verlaufen in der x-y-Ebene.

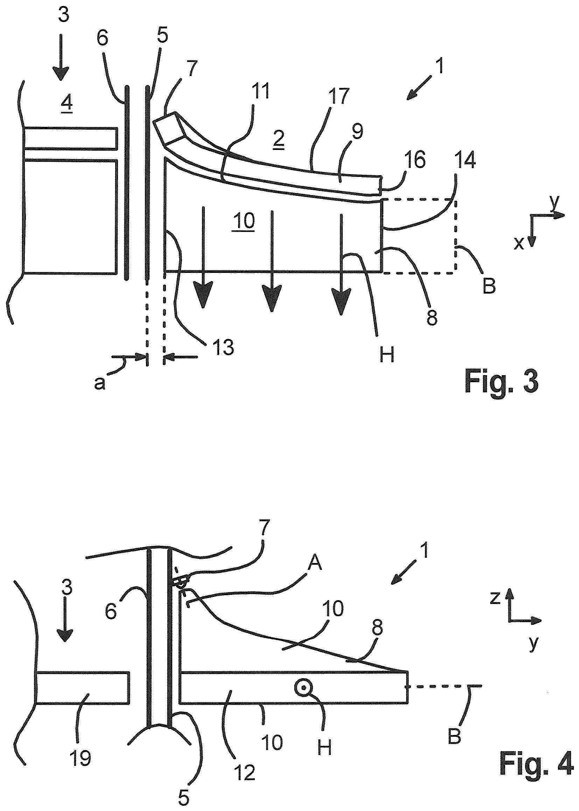

Aus Figur 3 ist ersichtlich, dass die Lichtquelle 7 in Verlängerung der Verbindungsseite 13 angeordnet ist. Der Abstand a der Beleuchtungsvorrichtung 1 zu der Karosserieabschlusskante 5 wird somit im Wesentlichen durch nicht dargestellte Gehäuseteile der Beleuchtungsvorrichtung 1 bestimmt.

Nach einer nicht dargestellten alternativen Ausführungsform der Erfindung kann die zweite Schmalseite 12 auch nicht gerade, beispielsweise zumindest teilweise bogenförmig und/oder mehre gerade Abschnitte, aufweisen.

### Bezugszeichenliste

- 1: Beleuchtungsvorrichtung
- 2: 1. Karosseriebauteil
- 3: Beleuchtungsvorrichtung
- 4: 2. Karosseriebauteil
- 5: Karosserieabschlusskante
- 6: Karosserieabschlusskante
- 7: Lichtquelle
- 8: flächiges Lichtleitelement
- 9: Lichtleiter
- 10: Flachseite
- 11: 1. Schmalseite
- 12: 2. Schmalseite
- 13: Verbindungsseite
- 14: Verbindungsseite
- 15: 1. Stirnseite
- 16: 2. Stirnseite
- 17: Mantelfläche
- 18: Eckbereich
- 19: Schmalfläche
- B: Basisebene
- H: Hauptabstrahlrichtung
- a: Abstand
- A: Hauptachse
- E1,E2,E3: Erstreckungslinie
- φ_{1,} φ₂: Verdrehwinkel

## Patentansprüche

1. Beleuchtungsvorrichtung für Fahrzeuge mit einem flächigen Lichtleitelement (8),
- das gegenüberliegende Flachseiten (10) aufweist, an denen eingekoppeltes Licht totalreflektiert wird,
- das in einem Lichteinkoppelbereich eine erste Schmalseite (11) aufweist zur Einkopplung des Lichtes,
- das in einem Lichtauskoppelbereich eine zweite Schmalseite (12) aufweist zur Auskopplung des Lichtes in Hauptabstrahlrichtung (H) der Beleuchtungsvorrichtung,
- das eine die erste Schmalseite (11) und die zweite Schmalseite (12) verbindende Verbindungsseite (13, 14) aufweist,
- dass ein der ersten Schmalseite (11) des flächigen Lichtleitelementes (8) konturfolgender langgestreckter Lichtleiter (9) angeordnet vorgesehen ist mit einer endseitig angeordneten ersten Stirnseite (15) und einer zweiten Stirnseite (16), zwischen denen sich eine Mantelfläche (17) des langgestreckten Lichtleiters (9) erstreckt, die Auskoppelelemente aufweist zur Umlenkung des in den langgestreckten Lichtleiter (9) eingekoppelten Lichtes, so dass von einem der ersten Schmalseite (11) des flächigen Lichtleitelementes (8) zugewandter Längsabschnitt der Mantelfläche (17) das Licht aus dem langgestreckten Lichtleiter (9) ausgekoppelt wird in Richtung der ersten Schmalseite (11) des flächigen Lichtleitelementes (8),
- dass das flächige Lichtleitelement (8) nicht eben ausgebildet ist,
- wobei das flächige Lichtleitelement (8) sich aus einer durch eine Erstreckungsebene (E₁) der zweiten Schmalseite (12) und einer Hauptabstrahlrichtung (H) aufgespannten Basisebene (B) in Richtung eines hinteren Eckbereichs (18) des Lichtleitelements (8) erhebt, wobei der Eckbereich (18) auf einer einer Karosserieabschlußkante (5) zugewandten Seite angeordnet ist, und
- dass die erste Schmalseite (11) in Richtung des Eckbereiches (18) bezüglich einer Erstreckungslinie (E₃) der ersten Schmalseite (11) um einen Verdrehwinkel (φ₁) und/oder die Verbindungsseite (13) in Richtung des Eckbereichs (18) bezüglich einer Erstreckungslinie (E₂) der Verbindungsseite (13) um einen Verdrehwinkel (φ₂) verdreht verlaufen.

2. Beleuchtungsvorrichtung nach Anspruch 1, **dadurch gekennzeichnet, dass** der Verdrehwinkel (φ₁, φ₂) in einem Bereich von 70° bis 90° angeordnet ist.

3. Beleuchtungsvorrichtung nach Anspruch 1 oder 2, **dadurch gekennzeichnet, dass** die erste Schmalseite (11) und die Verbindungsseite (13) kontinuierlich in den Eckbereich (18) verlaufen.

4. Beleuchtungsvorrichtung nach einem der Ansprüche 1 bis 3, **dadurch gekennzeichnet, dass** die erste Schmalseite (11) in einem dreidimensionalen Raum bogenförmig verläuft, wobei eine erste Bogenformkomponente in einer Ebene senkrecht zur Hauptabstrahlrichtung (H) verläuft und eine andere Bogenformkomponente in der Basisebene (B) verläuft.

5. Beleuchtungsvorrichtung nach einem der Ansprüche 1 bis 4, **dadurch gekennzeichnet, dass** die Verbindungsseite (13) des flächigen Lichtleitelementes (8) in einem zweidimensionalen Raum bogenförmig verläuft, wobei eine Bogenform in einer Ebene senkrecht zur Basisebene (B) und parallel zur Hauptabstrahlrichtung (H) verläuft.

6. Beleuchtungsvorrichtung nach einem der Ansprüche 1 bis 5, **dadurch gekennzeichnet, dass** der ersten Stirnseite (15) des Lichtleiters (9) die Lichtquelle (9) zugeordnet ist.

7. Beleuchtungsvorrichtung nach einem der Ansprüche 1 bis 6, **dadurch gekennzeichnet, dass** die Lichtquelle (9) eine gedachte Verlängerung der Verbindungsseite (13) schneidet.

8. Beleuchtungsvorrichtung nach einem der Ansprüche 1 bis 7, **dadurch gekennzeichnet, dass** eine Hauptachse (A) der Lichtquelle (7) in einer Senkrechten oder in einem kleinen Winkel zu der Senkrechten verläuft, wobei die Senkrechte senkrecht zu der Basisebene (B) des flächigen Lichtleitelementes (8) angeordnet ist.

9. Beleuchtungsvorrichtung nach einem der Ansprüche 1 bis 8, **dadurch gekennzeichnet, dass** die Beleuchtungsvorrichtung (1) in einem ersten Karosseriebauteil (2) verbaut ist mit einem Abstand (a) zu der Karosserieabschlusskante (5) desselben, wobei der Abstand (a) durch den Abstand (a) der Verbindungsseite (13) des flächigen Lichtleitelementes (8) zu der Karosserieabschlusskante (5) bestimmt ist.

10. Beleuchtungsvorrichtung nach Anspuüch 9, **dadurch gekennzeichnet, dass** parallel zu der Karosserieabschlusskante (5) des ersten Karosseriebauteils (2) eine Karosserieabschlusskante (6) eines zum ersten Karosseriebauteils (2) relativ beweglichen weiteren zweiten Karosseriebauteils (4) vorgesehen ist, wobei in dem zweiten Karosseriebauteil (4) eine weitere Beleuchtungsvorrichtung (3) verbaut ist.

11. Beleuchtungsvorrichtung nach Anspruch 10, **dadurch gekennzeichnet, dass** die in dem ersten Karosseriebauteil (2) verbaute Beleuchtungsvorrichtung (1) und die in dem zweiten Karosseriebauteil (5) verbaute Beleuchtungsvorrichtung (3) derart ansteuerbar sind, dass sie die gleiche Signallichtfunktion erzeugen.

## Claims

1. Illumination device for vehicles with a flat light-conducting element (8),
- which has opposing flat sides (10) at which light coupled in is totally reflected,
- which has a first narrow side (11) in a light coupling-in area for coupling in the light,
- which has a second narrow side (12) in a light coupling-out area for coupling out the light in the main radiation direction (H) of the illumination device,
- which has a connecting side (13, 14) joining the first narrow side (11) and the second narrow side (12),
- that an elongated optical waveguide (9) is provided, which follows the contour of the first narrow side (11) of the flat light-conducting element (8) and has a first end face (15) arranged at the end and a second end face (16) between which an outer surface (17) of the elongated optical waveguide (9) extends, which has coupling-out elements for deflecting the light coupled into the elongated optical waveguide (9), so that the light is coupled out of the elongated optical waveguide (9) in the direction of the first narrow side (11) of the flat light-conducting element (8) by a longitudinal section of the outer surface (17) towards the first narrow side (11) of the flat light-conducting element (8),
- that the flat light-conducting element (8) is not designed to be level,
- and that the flat light-conducting element (8) rises from a base plane (B) spanned by an extension plane (E₁) of the second narrow side (12) and a main radiation direction (H) in the direction of a rear corner region (18) of the light guiding element (8), said corner region (18) being arranged on a side facing a body end edge (5), and
- that the first narrow side (11) is twisted by a twist angle (φ₁) in the direction of the corner region (18) relative to an extension line (E₃) of the first narrow side (11) and/or the connecting side (13) is twisted by a twist angle (φ₂) in the direction of the corner region (18) relative to an extension line (E₂) or the connecting side (13).

2. Illumination device according to Claim 1, **characterized in that** the twist angle (φ₁, φ₂) is in the range from 70° to 90°.

3. Illumination device according to Claim 1 or 2, **characterized in that** the first narrow side (11) and the connecting side (13) extend continuously into the corner region (18).

4. Illumination device according to one of Claims 1 to 3, **characterized in that** the first narrow side (11) extends in an arc in a three-dimensional space with a first arc component extending in a plane perpendicular to the main radiation direction (H) and another arc component extending in the base plane (B).

5. Illumination device according to one of Claims 1 to 4, **characterized in that** the connecting side (13) of the flat light-conducting element (8) extends in an arc in a two-dimensional space with an arc extending in a plane perpendicular to the base plane (B) and parallel to the main radiation direction (H).

6. Illumination device according to one of Claims 1 to 5, **characterized in that** the light source (7) is assigned to the first end face (15) of the optical waveguide (9).

7. Illumination device according to one of Claims 1 to 6, **characterized in that** the light source (7) intersects an imaginary extension of the connecting side (13).

8. Illumination device according to one of Claims 1 to 7, **characterized in that** a main axis (A) of the light source (7) extends perpendicularly or at a small angle to the perpendicular, whereby the perpendicular is perpendicular to the base plane (B) of the flat light-conducting element (8).

9. Illumination device according to one of Claims 1 to 8, **characterized in that** the illumination device (1) is installed in a first vehicle body component (2) at a distance (a) from the vehicle body end edge (5) of the same, distance (a) being determined by the distance (a) between the connecting side (13) of the flat light-conducting element (8) and the vehicle body end edge (5).

10. Illumination device according to Claim 9, **characterized in that** a vehicle body end edge (6) of a further, second vehicle body component (4) that can move relative to the first vehicle body component (2) is provided parallel to the vehicle body end edge (5) of the first vehicle body component (2) with a further illumination device (3) being installed in the second vehicle body component (4).

11. Illumination device according to Claim 10, **characterized in that** the illumination device (1) installed in the first vehicle body component (2) and the illumination device (3) installed in the second vehicle body component (5) can be controlled in such a way that they generate the same signal light function.

## Revendications

1. Dispositif d'éclairage pour véhicules avec un élément conducteur de lumière à plat (8),
- comportant des côtés plats (10) opposés sur lesquels la lumière couplée est réfléchie en totalité,
- comportant, dans une zone de couplage de la lumière, un premier côté étroit (11) pour le couplage de la lumière,
- comportant, dans une zone de découplage de la lumière, un deuxième côté étroit (12) pour le découplage de la lumière dans le sens de rayonnement principal (H) du dispositif d'éclairage,
- comportant un côté de liaison (13, 14) reliant le premier côté étroit (11) et le deuxième côté étroit (12),
- **caractérisé en ce qu'**un guide de lumière allongé (9) suivant le contour du premier côté étroit (11) de l'élément conducteur de lumière à plat (8) est conçu avec une première face frontale (15) à l'extrémité et une deuxième face frontale (16) entre lesquelles s'étend une surface enveloppante (17) du guide de lumière allongé (9), qui présente des éléments de découplage pour dévier la lumière couplée dans le guide de lumière allongé (9), de sorte que la lumière du guide de lumière allongé (9) est découplée dans la direction du premier côté étroit (11) de l'élément conducteur de lumière plat (8) depuis une section longitudinale de la surface enveloppe (17) tournée vers le premier côté étroit (11) de l'élément conducteur de lumière plat (8),
- **en ce que** l'élément conducteur de lumière à plat (8) n'est pas réalisé de manière plane,
- où l'élément conducteur de lumière à plat (8) s'élève d'un plan de base (B) tendu à travers un plan d'extension (E₁) depuis le deuxième côté étroit (12) et un sens de rayonnement principal (H) en direction d'une zone angulaire arrière (18) de l'élément conducteur de lumière (8), la zone angulaire (18) pouvant être disposée sur un côté tourné vers un bord d'extrémité d'un premier composant de carrosserie (5), et
- **en ce que** le premier côté étroit (11) s'étend en direction de la zone angulaire (18) par rapport à une ligne d'extension (E₃) du premier côté étroit (11) pivoté d'un angle de torsion (φ₁) et/ou le côté de liaison (13) s'étend en direction de la zone angulaire (18) par rapport à une ligne d'extension (E₂) du côté de liaison (13) pivoté d'un angle de torsion (φ₂).

2. Dispositif d'éclairage selon la revendication 1, **caractérisé en ce que** l'angle de torsion (φ₁, φ₂) est disposé dans une plage de 70° à 90°.

3. Dispositif d'éclairage selon la revendication 1 ou 2, **caractérisé en ce que** le premier côté étroit (11) et le côté de liaison (13) s'étendent de manière continue dans la zone angulaire (18).

4. Dispositif d'éclairage selon l'une des revendications 1 à 3, **caractérisé en ce que** le premier côté étroit (11) s'étend en forme d'arc dans un espace tridimensionnel, une première composante en forme d'arc s'étendant dans un plan perpendiculaire au sens de rayonnement principal (H) et une autre composante en forme d'arc s'étendant dans le plan de base (B).

5. Dispositif d'éclairage selon l'une des revendications 1 à 4, **caractérisé en ce que** le côté de liaison (13) de l'élément conducteur de lumière à plat (8) s'étend en forme d'arc dans un espace bidimensionnel, une forme d'arc s'étendant dans un plan perpendiculaire au plan de base (B) et parallèle au sens de rayonnement principal (H).

6. Dispositif d'éclairage selon l'une des revendications 1 à 5, **caractérisé en ce que** la première face frontale (15) du guide de lumière (9) est associée à la source de lumière (7).

7. Dispositif d'éclairage selon l'une des revendications 1 à 6, **caractérisé en ce que** la source de lumière (7) coupe un prolongement imaginaire du côté de liaison (13).

8. Dispositif d'éclairage selon l'une des revendications 1 à 7, **caractérisé en ce qu'**un axe principal (A) de la source de lumière (7) s'étend selon une perpendiculaire ou selon un petit angle par rapport à la perpendiculaire, la perpendiculaire étant disposée perpendiculairement au plan de base (B) de l'élément conducteur de lumière à plat (8).

9. Dispositif d'éclairage selon l'une des revendications 1 à 8, **caractérisé en ce que** le dispositif d'éclairage (1) est monté dans un premier élément de carrosserie (2) à une distance (a) de son bord d'extrémité (5), la distance (a) étant déterminée par la distance (a) entre le côté de liaison (13) de l'élément conducteur de lumière à plat (8) et le bord d'extrémité (5) de la carrosserie.

10. Dispositif d'éclairage selon la revendication 9, **caractérisé en ce qu'**un bord d'extrémité de carrosserie (6) d'un deuxième élément de carrosserie (4) supplémentaire, mobile par rapport au premier élément de carrosserie (2), est prévu parallèlement au bord d'extrémité de carrosserie (5) du premier élément de carrosserie (2), un dispositif d'éclairage (3) supplémentaire étant monté dans le deuxième élément de carrosserie (4).

11. Dispositif d'éclairage selon la revendication 10, **caractérisé en ce que** le dispositif d'éclairage (1) monté dans le premier élément de carrosserie (2) et le dispositif d'éclairage (3) monté dans le deuxième élément de carrosserie (5) peuvent être commandés de telle sorte qu'ils génèrent la même fonction de signalisation lumineuse.
